# EUROPÄISCHE PATENTSCHRIFT

(11) **EP 1 371 435 B1**
(45) Veröffentlichungstag und Bekanntmachung des Hinweises auf die Patenterteilung: **27.07.2005**
(21) Anmeldenummer: 03011792.3
(22) Anmeldetag: 24.05.2003
(51) Int. Cl.: B23B 31/12

(54) **Bohrfutter**
Drill chuck
Mandrin de forage

(30) Priorität: 13.06.2002 DE 10226429
(43) Veröffentlichungstag der Anmeldung: 17.12.2003
(73) Patentinhaber: Röhm GmbH, 89567 Sontheim (DE)
(72) Erfinder: Günter Horst Röhm, 89567 Sontheim (DE)
(74) Vertreter: Hentrich, Swen Dipl.-Phys. Dr.

(56) Entgegenhaltungen:
- EP-A- 0 325 284
- EP-A- 0 519 412
- US-A- 5 732 956
- US-A1- 2002 022 442
- US-B1- 6 260 857

## Beschreibung

Die Erfindung betrifft ein Bohrfutter gemäß dem Oberbegriff der Anspruchs 1. Ein solcher Bohrfutter ist aus der US 2002/02 24 42 A bekannt.

Derartige Bohrfutter sind auch aus der EP 0 468 128 A1 bekannt, die sich durch ihre einfache und kostensparende Montage auszeichnen und sich in der Praxis bewährt haben. Es ist allerdings als wünschenswert erachtet worden, beim Bohrvorgang, insbesondere beim Schlagbohren, auftretende Vibrationen zu dämpfen und eine bessere Führung der Spannhülse zu ermöglichen, ohne daß in Folge von Reibungskräften der Spannvorgang erschwert und die mit diesen schlüssellos zu spannenden Bohrfuttern maximal erreichbare Spannkraft vermindert wird.

Der Erfindung liegt daher die Aufgabe zu Grunde, ein schlüssellos zu spannendes Bohrfutter bereitzustellen, bei dem eine möglichst leichte Drehbarkeit der Spannhülse mit dem Gewindering gegenüber dem Futterkörper gegeben sein soll zusammen mit einer Verminderung von Vibrationen der Spannhülse beim Bohrvorgang.

Diese Aufgabe wird nach der Erfindung der eingangs genannten Art gemäß Anspruch 1 dadurch gelöst, daß die Spannhülse axial unverschieblich zu dem Gewindering angeordnet ist, und daß beim Spannvorgang die Spannhülse axial nach rückwärts verstellbar und zur Anlage am Futterkörper bringbar ist. Vorteilhafte Ausführungen des erfindungsgemäßen Bohrfutters sind in der Unteransprüchen beschrieben.

Mit einem derartigen Bohrfutter erfolgt der Spannvorgang derartig, daß beim Verdrehen der Spannhülse dem den Schließen entsprechenden Richtung die Spannbacken in den Führungsaufnahmen auf den Schaft des Werkzeuges verstellt werden, wobei sich die Spannbacken nach der Anlage an den Schaft des Werkzeuges über die Verzahnung und dem Gewindering an dem Druckring abstützen, der aufgrund seiner axialen Federwirkung axial nach hinten ausgelenkt wird. Diese Bewegung des Gewinderinges mit dem Druckring wird durch das in gleiche Richtung wirkende vorgespannte Federelement unterstützt, so daß in Folge der Verbindung von dem Gewindering und der Spannhülse auch die Spannhülse axial nach rückwärts verstellt wird, bis diese in Kontakt mit dem Futterkörper kommt, so daß die Spannhülse besser geführt ist und deren Vibrationen gedämpft werden. Zu beachten ist dabei, daß die Verdrehbarkeit der Spannhülse während des Spannvorgangs nicht behindert ist und erst am Ende des Spannvorgangs die Spannhülse die Lage einnimmt, die diese während des Bohrbetriebes besitzen soll.

Ein hinsichtlich ihrer Einfachheit und leichten Montage des Bohrfutters bevorzugte Ausführungsform ist dadurch gekennzeichnet, daL auf einer axial nach rückwärts gerichteten Hülsenschulter der Spannhülse der Gewindering abgestützt und die Spannhülse durch das Federelement gegenüber dem Futterkörper gehalten ist. Mit dieser Ausführungsform ist der weitere Vorteil verbunden, daß die axial nach rückwärts gerichtete Bewegung der Spannhülse unmittelbar durch das Federelement unterstützt wird, also durch die Verstellung des Druckringes mit dem Gewindering eine Freigabe der Bewegung der Spannhülse erfolgt, die latent durch das Federelement stets möglich ist.

Günstig ist dabei wenn das Federelement durch eine Ringscheibe gebildet ist und insbesondere, wenn die Ringscheibe axial von hinten auf den Futterkörper aufsteckbar ist, und mittels eines in eine Ringnut der Spannhülse eingreifenden, auf der Ringscheibe aufliegenden Sicherungsringes die Spannhülse sichert. Vorteilhaft ist dabei wiederum die einfache Montierbarkeit, da durch einfache Steckverbindungen das Bohrfutter zusammengebaut werden kann, indem zunächst der Gewindering von hinten in die Spannhülse eingesteckt und die so gebildete Einheit von vorne über den Futterkörper geführt wird, bis die Sicherung dieser Baueinheit am axial rückwärtigen Ende des Futterkörpers durch die auf den Futterkörper aufgesteckte Ringscheibe mit dem Sicherungsring erfolgt. Vorteilhaft ist weiterhin die über einen größeren axialen Bereich erfolgende Führung der Spannhülse, die damit nicht bloß am Gewindering gehalten ist.

Die axiale Federwirkung des als Ringfeder gestalteten Druckrings läßt sich in besonders einfacher Weise dadurch erreichen, daß der Druckring an einer axial nach vorne gerichteten Ringschulter des Futterkörpers abgestützt ist bei maximal 70-prozentiger, vorzugsweise 50-prozentiger und insbesondere 25-prozentiger Überdeckung des Druckringes durch die Körperschulter.

Da zur Dämpfung von Vibrationen und besserer Führung der Spannhülse kein hoher Anpressdruck erforderlich ist, ist das Bohrfutter zweckmäßigerweise so gestaltet, daß die Auslenkung des Druckringes bei Anlage der Spannbacken an den Schaft des zu spannenden Werkzeuges dem axialen Abstand eines Hülsenbundes der Spannhülse vom Futterkörper im geöffneten Zustand des Bohrfutters entspricht. Um dabei die axiale Führungslänge der Spannhülse zu vergrößern, ist der Hülsenbund axial vor dem Gewindering angeordnet.

Die maximale axiale Führungslänge für die Spannhülse läßt sich erreichen, indem der Hülsenbund durch einen axial nach innen gerichteten Kragen am vorderen Ende der Spannhülse gebildet ist.

Eine besonders effektive Dämpfung von Vibrationen der Spannhülse wird erzielt, wenn zwischen dem Hülsenbund und dem Futterkörper ein Dämpfungsglied angeordnet ist. Zweckmäßigerweise ist das Dämpfungsglied durch einen Dämpfungsring gebildet, der insbesondere aus Gummi oder einem Kunststoff gebildet sein kann.

Alternativ besteht die Möglichkeit, daß das Dämpfungsglied durch einen vom Hülsenbund abstehenden Dämpfungsschenkel gebildet ist. Die Montage des Bohrfutters ist dann vereinfacht, wenn der Dämpfungsschenkel einstückig mit dem Hülsenbund gebildet und mittels einer in Umfangsrichtung verlaufenden Nut realisiert ist.

Da der Gewindering auf der Hülsenschulter der Spannhülse aufliegt, ist es nicht erforderlich, diesen Gewindering durch den Futterkörper selber axial nach vorne zu sichern, so daß der Gewindering ungeteilt ausgebildet ist, da dieser nicht in eine Ringnut des Futterkörpers eingesetzt werden muß und damit der Futterkörper am axial vorderen Ende weiterhin materialsparend nur einen geringen Durchmesser aufweisen muß, über den der Gewindering aufgesteckt werden kann.

Eine ganz besonders bevorzugte Ausführungsform der Erfindng ist dadurch gekennzeichnet, daß zwischen der Spannhülse und dem Futterkörper eine Verriegelungsvorrichtung angeordnet ist, durch die gewährleistet werden kann, daß sich während des Bohrbetriebes die beim Spannvorgang erreichte Spannkraft nicht verringert.

Als günstig hat sich dabei gezeigt, wenn die Verriegelungsvorrichtung eine drehfest mit dem Gewindering verbundene Zwischenhülse aufweist, in der ein Sperrglied angeordnet ist, das bei der durch Anschläge bewirkten begrenzten Verdrehbarkeit der Spannhülse gegenüber dem Gewindering beim Spannen in Eingriff mit einer gegenüber dem Futterkörper undrehbaren Sperrverzahnung beziehungsweise beim Öffnen des Bohrfutter außer Eingriff zu bringen ist. Diese Ausführungsform zeichnet sich besonders hinsichtlich der Einfachheit ihrer Bedienung aus, da die Betätigung der Verriegelungseinrichtung zwangsweise beim Verdrehen der Spannhülse erfolgt, also die Verriegelungsvorrichtung neben dem Verdrehen der Spannhülse relativ zum Futterkörper beim Öffnen und Schließen des Bohrfutters keine zusätzliche Bedienung erfordert.

Um die Fertigungskosten gering zu halten ist es dabei zweckmäßig, wenn die Sperrverzahnung an dem drehfest mit dem Futterkörper verbundenen Druckring ausgebildet ist.

Es besteht alternativ allerdings auch die Möglichkeit, daß die Sperrverzahnung am Futterkörper ausgebildet ist und eine axiale Erstreckung aufweist, die größer als die Auslenkung des Druckrings beim Spannvorgangs ist.

Um die Sicherheit beim Bohrbetrieb weiter zu erhöhen, ist auf der Spannhülse eine drehbare Schutzkappe angeordnet, wobei die Montage der Schutzkappe dann besonders einfach ist, wenn die Schutzkappe einen radial nach innen gerichteten Kappenbund aufweist, der in eine an der Spannhülse ausgebildete Lagernut eingreift.

Im folgenden wird die Erfindung an in der Zeichnung dargestellten Ausführungsbeispielen näher erläuter; es zeigen:
- Fig. 1: eine Seitenansicht eines Bohrfutters einer ersten Ausfürungsform, links geschnitten dargestellt,
- Fig. 2: eine der Figur 1 entsprechende Darstellung einer Ausführungsform mit Verriegelungsvorrichtung mit dem Druckring in der Ruhestellung,
- Fig. 3: eine der Figur 2 entsprechende Darstellung mit dem ausgelenkten Druckring,
- Fig. 4: eine der Figur 2 entsprechenden Darstellung einer alternativen Ausführungsform mit einem am Hülsenbund angeordneten Dämpfungsschenkel,
- Fig. 5: eine der Figur 3 entsprechende Darstellung eines Bohrfutters gemäß Figur 4,
- Fig. 6: der Schnitt VI - VI aus Figur 2,
- Fig. 6a: der Schnitt VIa - VIa aus Figur 2,

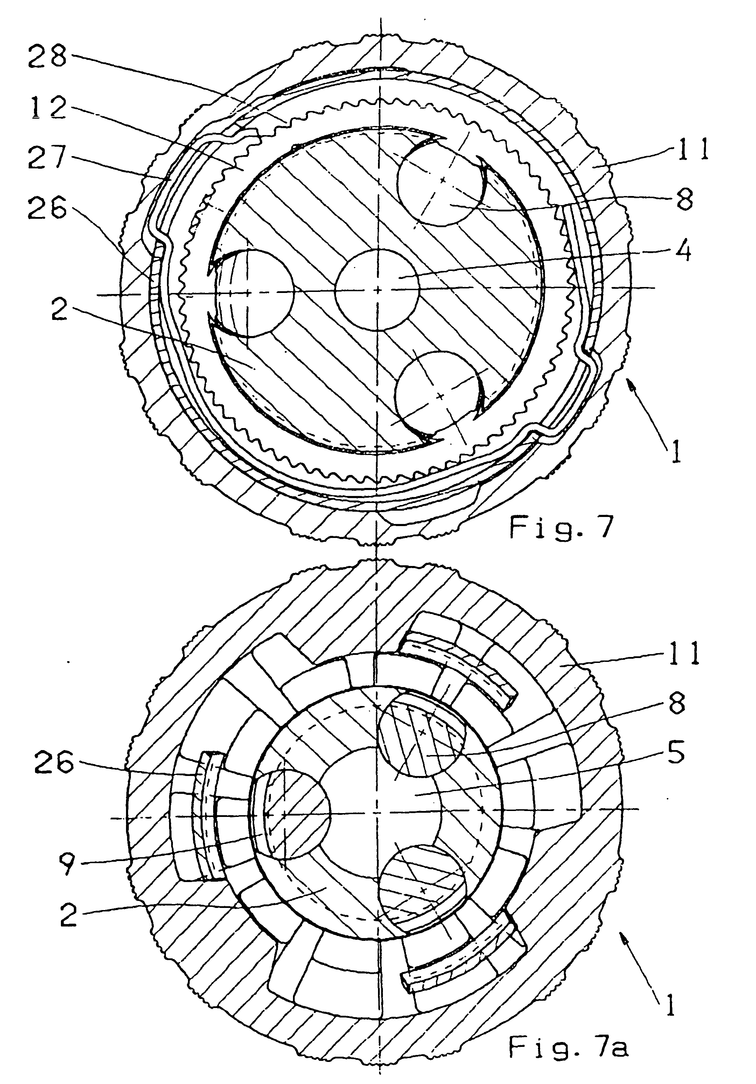

- Fig. 7: der Schnitt VII - VII aus Figur 3,
- Fig. 7a: der Schnitt VIIa - VIIa aus Figur 3, und
- Fig. 8: eine Seitenansicht, teilweise geschnitten dargestellt, eines Bohrfutters mit einer drehbar auf der Spannhülse angeordneten Schutzkappe.

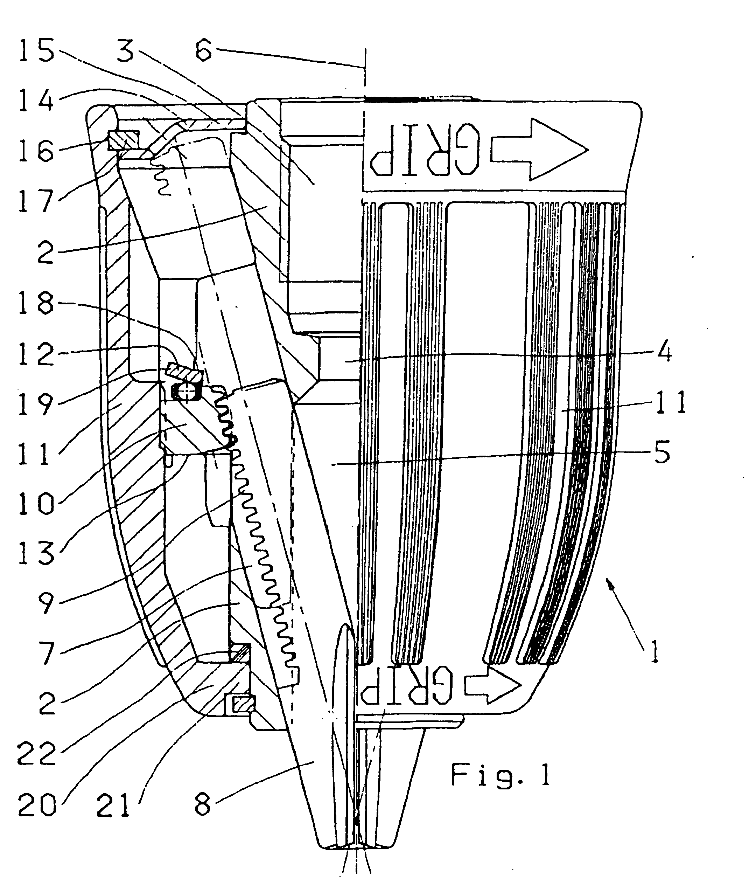

In Figur 1 ist ein Bohrfutter 1 dargestellt, daß einen Futterkörper 2 aufweist, an dessen rückwärtigem Ende eine Spindelaufnahme 3 ausgebildet ist, an die sich nach vorne ein axialer Durchgang 4 anschließt, der in eine Werkzeugaufnahme 5 mündet. In diese Werkzeugaufnahme 5 münden weiterhin axial gegenüber der Futterachse 6 geneigt im Futterkörper 2 verlaufende Führungsaufnahmen 7 für Spannbacken 8, die auf ihrer radial außen liegenden Seite jeweils eine Zahnreihe 9 aufweisen, die in ein Innengewinde eines Gewinderinges 10 eingreifen, um durch eine Verdrehung des Gewinderinges 10 relativ zum Futterkörper 2 die Spannbacken 8 in den Führungsaufnahmen 7 zu verstellen und so das Bohrfutter 1 zu öffnen oder zu schließen. Zur leichteren Ergreifbarkeit und damit Verdrehbarkeit und zum Aufbringen einer ausreichenden Spannkraft ist der Gewindering 10 mit einer koaxialen Spannhülse 11 gekoppelt.

Axial nach hinten ist der Gewindering 10 über einen Druckring 12 gegenüber dem Futterkörper 2 abgestützt, während die axiale Sicherung des Gewinderinges 10 nach vorn über die Spannhülse 11 bewirkt wird, die dazu eine axial nach rückwärts gerichtete Hülsenschulter 13 aufweist und über ein axial nach rückwärts vorgespanntes Federelement 14 am Futterkörper 2 gehalten ist. Das Federelement 14 ist durch eine Ringscheibe 15 gebildet, die axial von hinten auf den Futterkörper 2 aufgesteckt wird und mittels eines in eine Ringnut 16 der Spannhülse 11 eingreifenden, auf der Ringscheibe 15 aufliegenden Sicherungsringes 17 die Spannhülse 11 sichert.

Wie aus Figur 1 ersichtlich ist, ist der Druckring 12 an einer axial nach vorne gerichteten Körperschulter 18 des Futterkörpers 2 abgestützt, wobei eine 25-prozentige Überdeckung des Druckringes 12 durch die Körperschulter 18 erfolgt. Bei einer axial nach hinten erfolgenden Belastung des Druckringes 12, wie diese gegeben ist, wenn die Spannbacken 8 an dem Schaft eines Werkzeuges zur Anlage kommen und sich über die Zahnreihe 9 und dem Gewindering 10 am Druckring 12 abstützen, kann der Druckring 12 nach hinten ausweichen, so daß der Druckring 12 als Ringfeder 19 mit axialer Federwirkung fungiert. Die Federwirkung des Druckringes 12 ist besonders ausgeprägt in Folge der nur geringen 25-prozentigen Überdeckung mit der Körperschulter 18, wobei die Überdeckung aber bis zu 70 Prozent erreichen kann, wenn eine entsprechend steifere Feder gewünscht ist.

Die Auslenkung des Druckrings 12 bei Anlage der Spannbacken 8 an den Schaft des zu spannenden Werkzeuges entspricht dem axialen Abstand eines Hülsenbundes 20 der Spannhülse 11 vom Futterkörper 2 im geöffneten Zustand des Bohrfutters 1, so daß bei der Verstellung der Spannhülse 11 mit dem Gewindering 10 zusammen, die durch das Federelement 14 unterstützt wird, die Spannhülse 11 so weit verstellt wird, daß diese am Futterkörper 2 zur Anlage kommt und dadurch sowohl gedämpft als auch radial geführt wird. Eine große axiale Führungslänge der Spannhülse 11 ist gegeben durch die Anordnung des Hülsenbundes 20 axial vor dem Gewindering 10 und insbesondere, wie in Figur 1 dargestellt, durch die Bildung des Hülsenbundes 20 mittels eines radial nach innen gerichteten Kragens 21 am vorderen Ende der Spannhülse 11.

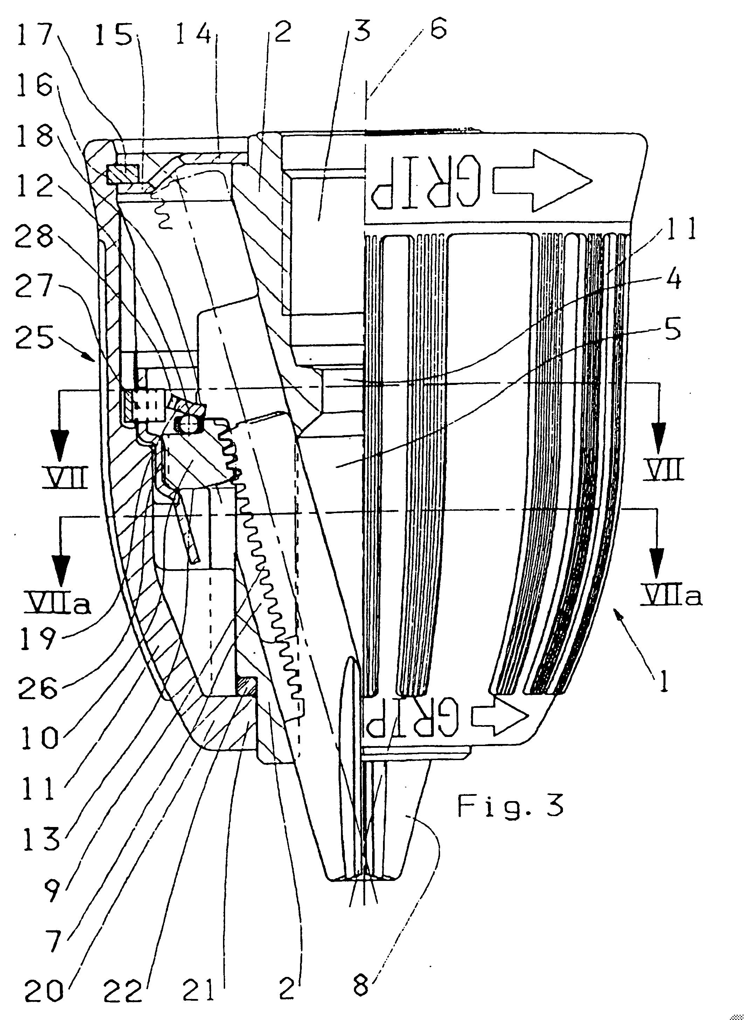

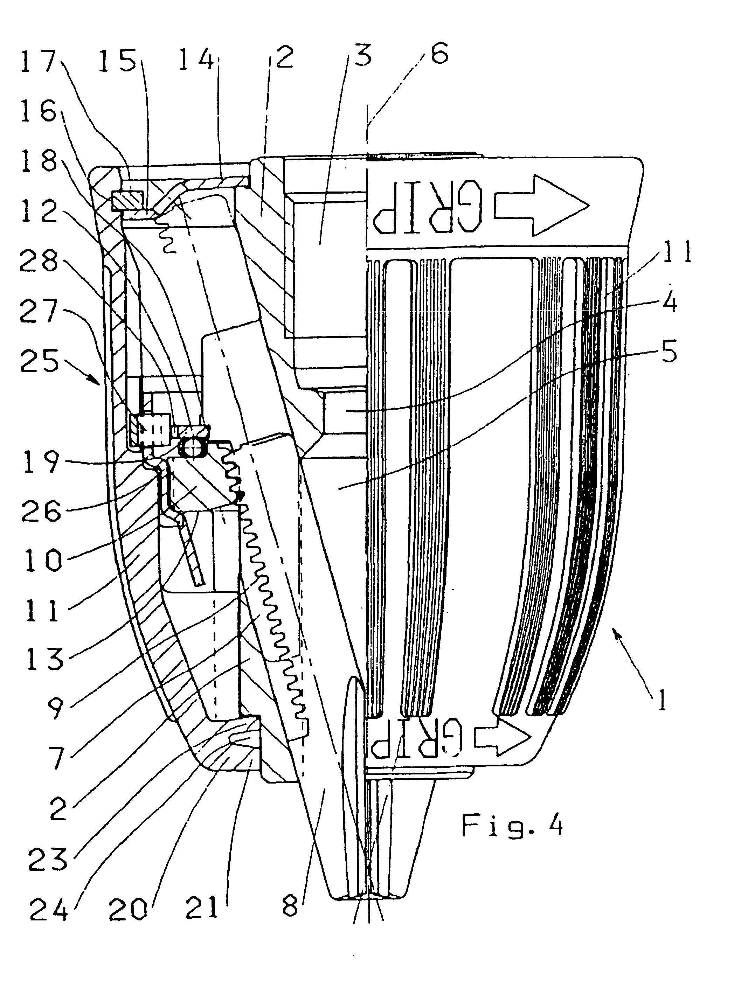

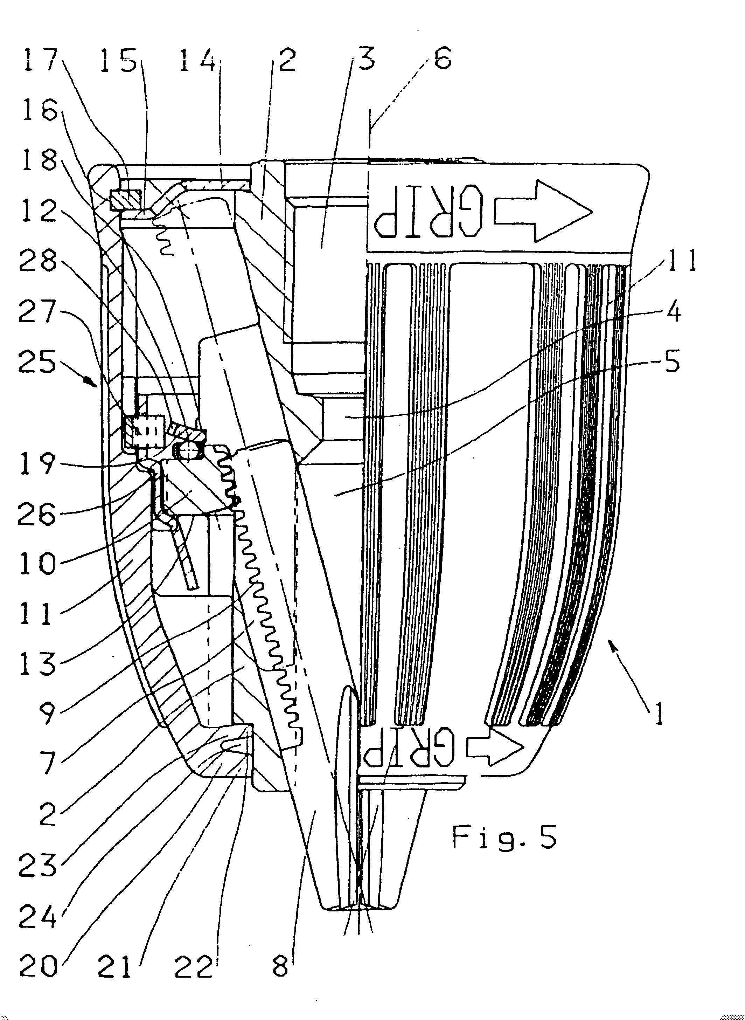

Zur besseren Dämpfung der Vibrationen der Spannhülse ist zwischen dem Hülsenbund 20 und dem Futterkörper 2 ein Dämpfungsglied 22 angeordnet, das gemäß der Ausführungsform in Figur 1 sowie den Figuren 2 und 3 als Dämpfungsring gebildet ist. Demgegenüber zeigen die Ausführungsformen in den Figuren 4 und 5 die Realisierung des Dämpfungsliedes 22 durch einen vom Hülsenbund 20 abstehenden Dämpfungsschenkel 23, der einstückig mit dem Hülsenbund 20 gebildet ist mittels einer in Umfangsrichtung verlaufenden Nut 24.

Bei diesen Ausführungsformen mit Dämpfungsglied 22 ist der Abstand des Hülsenbundes 20 von dem Futterkörper 2 so bemessen, daß das Dämpfungsglied 22 beaufschlagt wird und eine Art Einspannung der Spannhülse 11 an ihren Enden erfolgt.

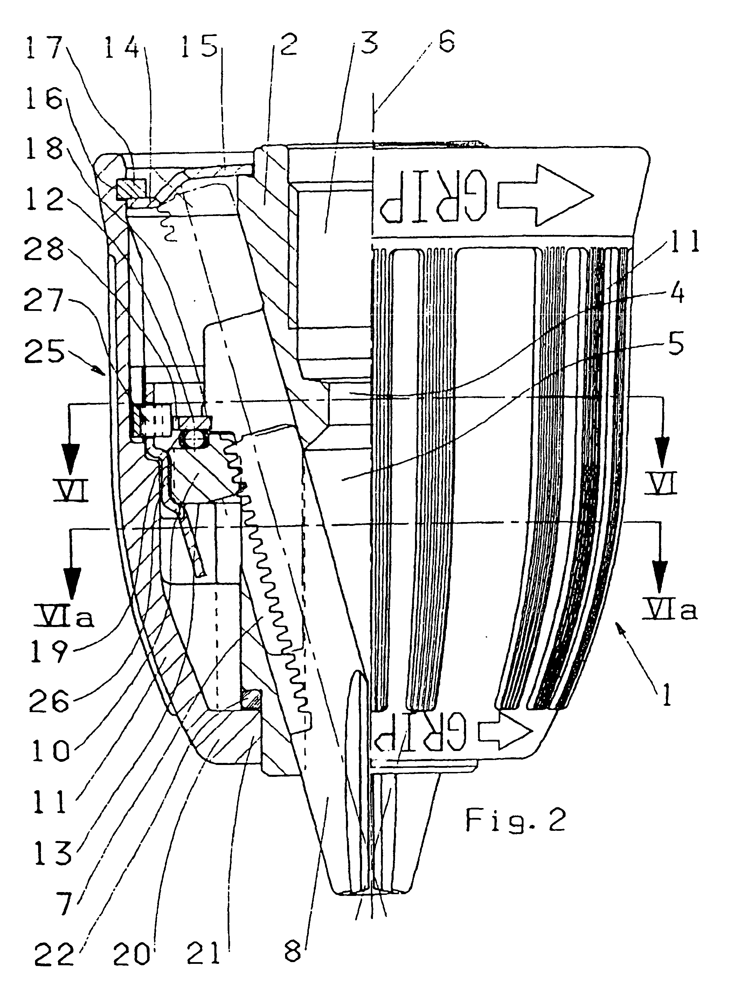

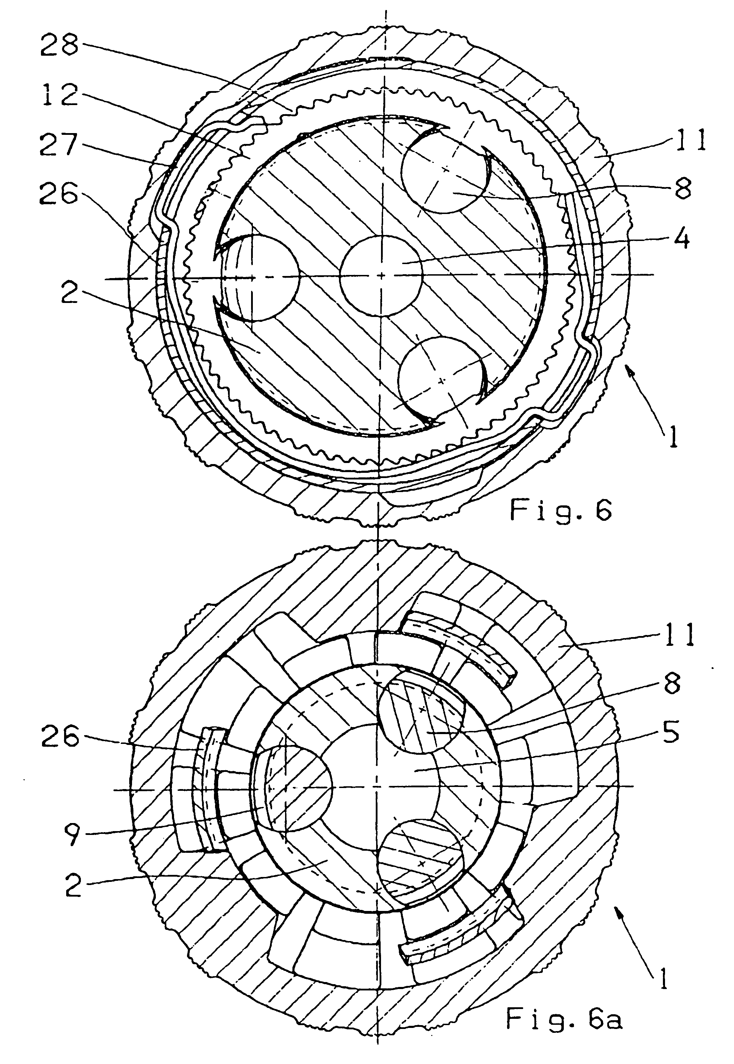

Bei den Ausführungsformen gemäß den Figuren 2 bis 6 ist zwischen der Spannhülse 11 und dem Futterkörper 2 eine Verriegelungsvorrichtung 25 angeordnet, wie diese grundsätzlich aus der EP 0 710 518 B1, EP 0 710 519 B1 und EP 0 710 520 B1 bekannt ist, so daß zur vollständigen Erläuterung und Offenbarung der Verriegelungsvorrichtung 25 auf diese Patentschriften verwiesen werden kann. Die Verriegelungsvorrichtung 25 weist eine drehfest mit dem Gewindering 10 verbundene Zwischenhülse 26 auf, in der ein Sperrglied 27 angeordnet ist, das infolge der durch Anschläge (Fig. VII, VIIa) bewirkten begrenzten Verdrehbarkeit der Spannhülse 11 gegenüber dem Gewindering 10 beim Spannen in Eingriff (Fig. VIa) mit einer gegenüber dem Futterkörper 2 undrehbaren Sperrverzahnung 28 beziehungsweise beim Öffnen des Bohrfutters 1 außer Eingriff zu bringen (Fig. VI) ist.

Die Sperrverzahnung 28 ist gemäß Figur 2 an dem drehfest mit dem Futterkörper 2 verbundenen Druckring 12 ausgebildet, wobei grundsätzlich auch die Möglichkeit besteht, daß die Sperrverzahnung 28 am Futterkörper 2 ausgebildet ist, wenn diese eine axiale Erstreckung besitzt, die größer als die Auslenkung des Druckringes 12 beim Spannvorgang ist.

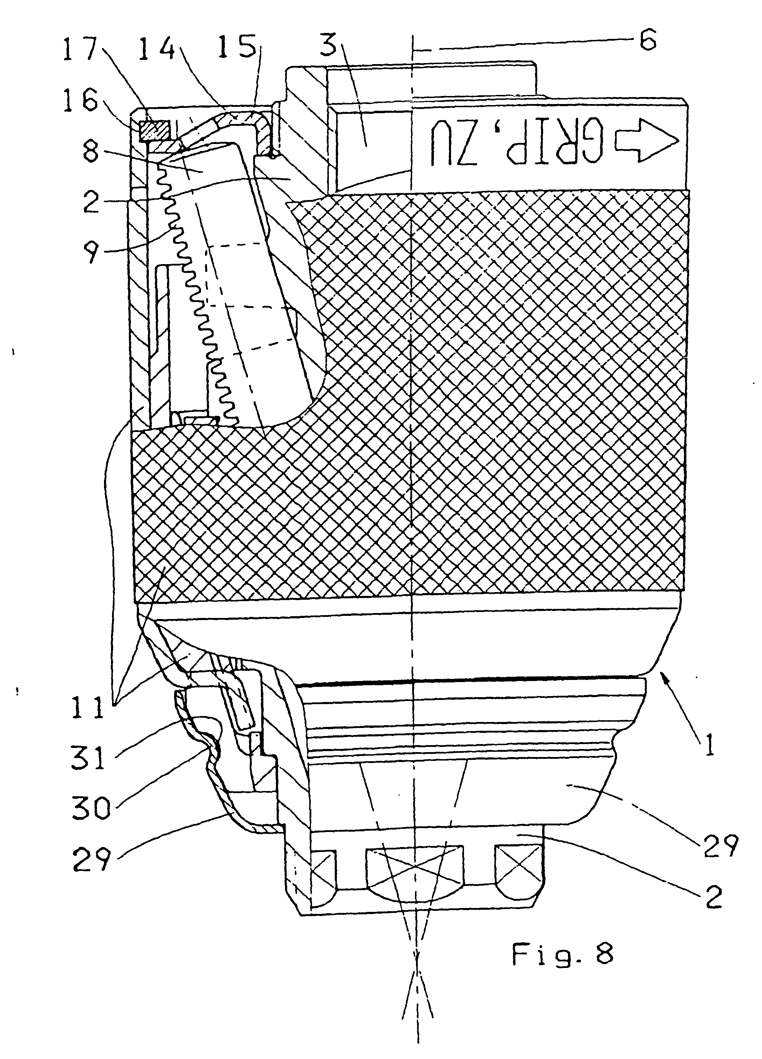

Figur 8 zeigt ein Ausführungsbeispiel, bei dem auf dem axial vorderen Ende der Spannhülse 11 eine drehbare Schutzkappe 29 angeordnet ist, die einen radial nach innen gerichteten Kappenbund 30 aufweist, der in eine an der Spannhülse ausgebildete Lagernut 31 eingreift, so daß die Schutzkappe 29 in einfacher Weise durch Aufstecken und Einführen des Kappenbundes 30 in die Lagernut 31 zu montieren ist. Möglich ist auch, Kappenbund 30 und Lagernut 31 gemeinsam, nach dem Aufstecken der Schutzkappe 29 durch in Umfangsrichtung wirkenden Druck oder durch Rollen auszubilden.

## Patentansprüche

1. Bohrfutter, insbesondere zum Schlagbohren, mit einem an eine Bohrspindel anschließbaren Futterkörper (2), der geneigt zur Futterachse (6) verlaufende Führungsaufnahmen (7) für Spannbacken (8) aufweist, die zum Öffnen und Schließen des Bohrfutters (1) über eine Verzahnung (9) mit einem koaxial zur Futterachse (6) drehbaren Gewindering (10) in Eingriff stehen, zu dessen Betätigung eine koaxiale Spannhülse (11) vorgesehen ist, und mit einem der axial rückwärtigen Abstützung des Gewinderinges (10) gegenüber dem Futterkörper (2) dienenden Druckring (12), wobei der Druckring (12) als Ringfeder (19) mit axialer Federwirkung gestaltet ist und der Gewindering (12) axial nach vorn durch ein axial nach rückwärts vorgespanntes Federelement (14) gesichert ist, **dadurch gekennzeichnet, daß** die Spannhülse (11) axial unverschieblich zu dem Gewindering (10) angeordnet ist, und daß beim Spannvorgang die Spannhülse (11) axial nach rückwärts verstellbar und zur Anlage am Futterkörper (2) bringbar ist.

2. Bohrfutter nach Anspruch 1, **dadurch gekennzeichnet, daß** auf einer axial nach rückwärts gerichteten Hülsenschulter (13) der Spannhülse (11) der Gewindering (10) abgestützt und die Spannhülse (11) durch das Federelement (14) gegenüber dem Futterkörper (2) gehalten ist.

3. Bohrfutter nach Anspruch 2, **dadurch gekennzeichnet, daß** das Federelement (14) durch eine Ringscheibe (15) gebildet ist.

4. Bohrfutter nach Anspruch 3, **dadurch gekennzeichnet, daß** die Ringscheibe (15) axial von hinten auf den Futterkörper (2) aufsteckbar ist und mittels eines in eine Ringnut (16) der Spannhülse (11) eingreifenden, auf der Ringscheibe (15) aufliegenden Sicherungsringes (17) die Spannhülse (11) sichert.

5. Bohrfutter nach einem der Ansprüche 1 bis 4, **dadurch gekennzeichnet, daß** der Druckring (12) an einer axial nach vorne gerichteten Körperschulter (18) des Futterkörpers (2) abgestützt ist bei maximal 70-prozentiger, vorzugsweise 50-prozentiger und insbesondere 25-prozentiger Überdeckung des Druckringes (12) durch die Körperschulter (18).

6. Bohrfutter nach einem der Ansprüche 1 bis 5, **dadurch gekennzeichnet, daß** die Auslenkung des Druckringes (12) bei Anlage der Spannbacken (8) an den Schaft des zu spannenden Werkzeuges dem axialen Abstand eines Hülsenbundes (20) der Spannhülse (11) vom Futterkörper (2) im geöffneten Zustand des Bohrfutter (1) entspricht.

7. Bohrfutter nach Anspruch 6, **dadurch gekennzeichnet, daß** der Hülsenbund (20) axial vor dem Gewindering (10) angeordnet ist.

8. Bohrfutter nach Anspruch 7, **dadurch gekennzeichnet, daß** der Hülsenbund (20) durch einen radial nach innen gerichteten Kragen (21) am vorderen Ende der Spannhülse (11) gebildet ist.

9. Bohrfutter nach einem der Ansprüche 6 bis 8, **dadurch gekennzeichnet, daß** zwischen dem Hülsenbund (20) und dem Futterkörper (2) ein Dämpfungsglied (22) angeordnet ist.

10. Bohrfutter nach Anspruch 9, **dadurch gekennzeichnet, daß** das Dämpfungsglied (22) durch einen Dämpfungsring gebildet ist.

11. Bohrfutter nach Anspruch 9, **dadurch gekennzeichnet, daß** das Dämpfungsglied (22) durch einen vom Hülsenbund (20) abstehenden Dämpfungsschenkel (23) gebildet ist.

12. Bohrfutter nach Anspruch 11, **dadurch gekennzeichnet, daß** der Dämpfungsschenkel (23) einstückig mit dem Hülsenbund (20) gebildet und mittels einer in Umfangsrichtung verlaufenden Nut (24) realisiert ist.

13. Bohrfutter nach einem der Ansprüche 2 bis 12, **dadurch gekennzeichnet, daß** der Gewindering (10) ungeteilt ausgebildet ist.

14. Bohrfutter nach einem der Ansprüche 1 bis 13, **dadurch gekennzeichnet, daß** zwischen der Spannhülse (11) und dem Futterkörper (2) eine Verriegelungsvorrichtung (25) (25) angeordnet ist.

15. Bohrfutter nach Anspruch 14, **dadurch gekennzeichnet, daß** die Verriegelungsvorrichtung (25) eine drehfest mit dem Gewindering (10) verbundene Zwischenhülse (26) aufweist, in der ein Sperrglied (27) angeordnet ist, das bei der durch Anschläge bewirkten begrenzten Verdrehbarkeit der Spannhülse (11) gegenüber dem Gewindering (10) Spannen in Eingriff mit einer gegenüber dem Futterkörper (2) undrehbaren Sperrverzahnung (28) bzw. beim Öffnen des Bohrfutters (1) außer Eingriff zu bringen ist.

16. Bohrfutter nach Anspruch 15, **dadurch gekennzeichnet, daß** die Sperrverzahnung (28) an dem drehfest mit dem Futterkörper (2) verbundenen Druckring (12) ausgebildet ist.

17. Bohrfutter nach Anspruch 15, **dadurch gekennzeichnet, daß** die Sperrverzahnung (28) am Futterkörper (2) ausgebildet ist und eine axiale Erstreckung aufweist, die größer als die Auslenkung des Druckringes (12) beim Spannvorgang ist.

18. Bohrfutter nach einem der Ansprüche 1 bis 17, **dadurch gekennzeichnet, daß** auf der Spannhülse (11) eine drehbare Schutzkappe (29) angeordnet ist.

19. Bohrfutter nach Anspruch 18, **dadurch gekennzeichnet, daß** die Schutzkappe (29) einen radial nach innen gerichteten Kappenbund (30) aufweist, der in eine an der Spannhülse (11) ausgebildete Lagernut (31) eingreift.

## Claims

1. A drilling chuck, in particular for hammer drilling, comprising a chuck body (2) which can be connected to a drilling spindle and which has guide receiving means (7) extending inclinedly with respect to the chuck axis (6), for clamping jaws (8) which for opening and closing the drilling chuck (1) are in engagement by way of a tooth arrangement (9) with a screwthreaded ring (10) which is rotatable coaxially with respect to the chuck axis (6) and for the actuation of which there is provided a coaxial clamping sleeve (11), and comprising a pressure ring (12) which serves for axially rearwardly supporting the screwthreaded ring (10) with respect to the chuck body (2), wherein the pressure ring (12) is in the form of a ring spring (19) having an axial spring action and the screwthreaded ring (12) is secured axially forwardly by an axially rearwardly prestressed spring element (14), **characterised in that** the clamping sleeve (11) is arranged axially immovably with respect to the screwthreaded ring (10) and that in the clamping operation the clamping sleeve (11) is displaceably axially rearwardly and can be brought to bear against the chuck body (2).

2. A drilling chuck according to claim 1 **characterised in that** the screwthreaded ring (10) is supported on an axially rearwardly directed shoulder (13) of the clamping sleeve (11) and the clamping sleeve (11) is held by the spring element (14) with respect to the chuck body (2).

3. A drilling chuck according to claim 2 **characterised in that** the spring element (14) is formed by a ring disc (15).

4. A drilling chuck according to claim 3 **characterised in that** the ring disc (15) can be fitted axially from the rear on to the chuck body (2) and secures the clamping sleeve (11) by means of a securing ring (17) which engages into an annular groove (16) in the clamping sleeve (11) and which bears against the ring disc (15).

5. A drilling chuck according to one of claims 1 to 4 **characterised in that** the pressure ring (12) is supported against an axially forwardly directed shoulder (18) of the chuck body (2) with a maximum of 70 per cent and preferably 50 per cent and in particular 25 percent coverage of the pressure ring (12) by the shoulder (18).

6. A drilling chuck according to one of claims 1 to 5 **characterised in that** deflection of the pressure ring (12) when the clamping jaws (8) bear against the shank of the tool to be clamped corresponds to the axial spacing of a flange (20) of the clamping sleeve (10) from the chuck body (2) in the opened condition of the drilling chuck (1).

7. A drilling chuck according to claim 6 **characterised in that** the flange (20) of the clamping sleeve (11) is arranged axially in front of the screwthreaded ring (10).

8. A drilling chuck according to claim 7 **characterised in that** the flange (20) of the clamping sleeve (11) is formed by a radially inwardly directed collar (21) at the front end of the clamping sleeve (11).

9. A drilling chuck according to one of claims 6 to 8 **characterised in that** a damping member (22) is arranged between the flange (20) of the clamping sleeve and the chuck body (2).

10. A drilling chuck according to claim 9 **characterised in that** the damping member (22) is formed by a damping ring.

11. A drilling chuck according to claim 9 **characterised in that** the damping member (22) is formed by a damping limb (23) projecting from the flange (20) of the clamping sleeve.

12. A drilling chuck according to claim 11 **characterised in that** the damping limb (23) is formed integrally with the flange (20) of the clamping sleeve and is embodied by a groove (24) extending in the peripheral direction.

13. A drilling chuck according to one of claims 2 to 12 **characterised in that** the screwthreaded ring (10) is of an undivided configuration.

14. A drilling chuck according to one of claims 1 to 13 **characterised in that** a locking device (25) is arranged between the clamping sleeve (11) and the chuck body (2).

15. A drilling chuck according to claim 14 **characterised in that** the locking device (25) has an intermediate sleeve (26) which is non-rotatably connected to the screwthreaded ring (10) and in which is arranged a locking member (27) which, with limited rotatability, provided by abutments, of the clamping sleeve (11) with respect to the screwthreaded ring (10), in the clamping operation, is to be brought into engagement with a locking tooth arrangement (28) which is non-rotatable with respect to the chuck body (2) and upon opening of the drilling chuck (1) is to be brought out of engagement therewith.

16. A drilling chuck according to claim 15 **characterised in that** the locking tooth arrangement (28) is provided on the pressure ring (12) non-rotatably connected to the chuck body (2).

17. A drilling chuck according to claim 15 **characterised in that** the locking tooth arrangement (28) is provided on the chuck body (2) and is of an axial extent which is greater than the deflection of the pressure ring (12) in the clamping operation.

18. A drilling chuck according to one of claims 1 to 17 **characterised in that** a rotatable protective cap (29) is arranged on the clamping sleeve (11).

19. A drilling chuck according to claim 18 **characterised in that** the protective cap (29) has a radially inwardly directed cap collar (30) which engages into a mounting groove (31) provided on the clamping sleeve (11).

## Revendications

1. Mandrin de forage, notamment pour appareil à percussion, comportant
- un corps de mandrin (2) qui peut être raccordé à une broche de forage et qui comporte, inclinés par rapport à l'axe de mandrin (6), des logements de guidage (7) destinés à des mâchoires de serrage (8) qui sont en prise, pour ouvrir et fermer le mandrin (1), par l'intermédiaire d'une denture (9), avec une bague filetée (10) qui peut tourner autour de l'axe de mandrin (6), et dont l'actionnement est assuré par une douille de serrage coaxiale (11),
- une bague de pression qui sert à assurer l'appui axial vers l'arrière de la bague filetée (10) sur le corps de mandrin (2), et qui est constituée par un ressort annulaire (19) exerçant une action axiale, la bague filetée (19) étant sécurisée axialement vers l'avant par un élément élastique (14) précontraint axialement vers l'arrière, **caractérisé en ce que** la douille de serrage (11) est montée sans pouvoir coulisser axialement par rapport à la bague filetée (11) et, lors du serrage, la douille de serrage (11) peut être déplacée axialement vers l'arrière pour venir en appui sur le corps de forage (2).

2. Mandrin de forage selon la revendication 1, **caractérisé en ce que** la bague filetée (10) s'appuie sur un épaulement (13) de la douille de serrage (11), situé axialement vers l'arrière de cette douille qui est maintenue sur le corps de mandrin (2) par l'élément élastique (14).

3. Mandrin de forage selon la revendication 2, **caractérisé en ce que** l'élément élastique (14) est constitué par un disque annulaire (15).

4. Mandrin de forage selon la revendication 3, **caractérisé en ce que** le disque annulaire (15) peut être emmanché axialement de l'arrière sur le corps de mandrin (2) et qu'il sécurise la douille de serrage (11) par l'intermédiaire d'une bague de sécurité (17) qui est engagée dans une rainure annulaire (16) de la douille de serrage (11) et appliquée sur le disque annulaire (15).

5. Mandrin de forage selon une des revendications 1 à 4, **caractérisé en ce que** la bague de pression (12) s'appuie sur un épaulement (18) du corps de mandrin (2), dirigé vers l'avant, avec recouvrement de la bague de pression (12) par l'épaulement de corps (18), atteignant au plus 70 %, de préférence 50 % et notamment 25 %.

6. Mandrin de forage selon une des revendications 1 à 5, **caractérisé en ce que** la déviation de la bague de pression (12), quand les mâchoires de serrage (8) viennent s'appliquer sur la tige de l'outil à serrer, correspond à la distance axiale existant entre un collet (20) de la douille de serrage (11) et le corps de mandrin (2), quand le mandrin (1) est ouvert.

7. Mandrin de forage selon la revendication 6, **caractérisé en ce que** le collet de douille (20) est disposé axialement devant la bague filetée (10).

8. Mandrin de forage selon la revendication 7, **caractérisé en ce que** le collet de douille (20) est constitué par un collet (21) dirigé radialement vers l'intérieur et réalisé à l'extrémité avant de la douille de serrage (11).

9. Mandrin de forage selon une des revendications 6 à 8, **caractérisé en ce qu'**un organe d'amortissement (22) est disposé entre le collet de douille (20) et le corps de mandrin (2).

10. Mandrin de forage selon la revendication 9, **caractérisé en ce que** l'organe d'amortissement (22) est constitué par une bague.

11. Mandrin de forage selon la revendication 9, **caractérisé en ce que** l'organe d'amortissement (22) est constitué par une branche d'amortissement (23) en saillie sur le collet de douille (20).

12. Mandrin de forage selon la revendication 11, **caractérisé en ce que** la branche d'amortissement (23) est monobloc avec le collet de douille (20) et qu'elle est réalisée par l'intermédiaire d'une rainure (24) disposée périphériquement.

13. Mandrin de forage selon une des revendications 2 à 12, **caractérisé en ce que** la bague filetée (10) est en une seule pièce.

14. Mandrin de forage selon une des revendications 1 à 13, **caractérisé en ce qu'**entre la douille de serrage (11) et le corps de mandrin (12) se trouve un dispositif de verrouillage (25).

15. Mandrin de forage selon la revendication 14, **caractérisé en ce que** le dispositif de verrouillage (25) présente une douille intermédiaire (26) solidaire en rotation de la bague filetée (10) et dans laquelle est monté un organe d'arrêt (27) qui doit être amené en prise avec une denture d'arrêt (28) qui ne peut tourner par rapport au corps de mandrin (2) quand on serre la douille de serrage (11) en la faisant tourner par rapport à la bague filetée (10) avec limitation par des butées, et doit être dégagé de la prise lorsqu'on ouvre le mandrin de forage (1).

16. Mandrin de forage selon la revendication 15, **caractérisé en ce que** la denture d'arrêt (18) est réalisée sur la bague de pression (12) solidaire en rotation du corps de mandrin (2).

17. Mandrin de forage selon la revendication 15, **caractérisé en ce que** la denture d'arrêt (28) est réalisée sur le corps de mandrin (12) et son étendue axiale est supérieure à la déviation que présente la bague de pression (12) lors du serrage.

18. Mandrin de forage selon une des revendications 1 à 17, **caractérisé en ce qu'**un capot de protection (29) rotatif est monté sur la douille de serrage (11).

19. Mandrin de forage selon la revendication 18, **caractérisé en ce que** le capot de protection (18) présente un collet (30) dirigé radialement vers l'intérieur est engagé dans une rainure de palier (31) réalisée dans la douille de serrage (11).
